Europäisches Patentamt

European Patent Office

Office européen des brevets

(19)

(11)  EP 0 812 747 B1

(12)  **EUROPÄISCHE PATENTSCHRIFT**

(45) Veröffentlichungstag und Bekanntmachung des Hinweises auf die Patenterteilung:
**14.08.2002  Patentblatt 2002/33**

(51) Int Cl.7: **B60T 7/12**, B60K 41/20

(21) Anmeldenummer: **97103216.4**

(22) Anmeldetag: **27.02.1997**

(54) **Vorrichtung und Verfahren zum Festhalten und Lösen von druckmittelbetätigten Fahrzeugbremsen für eine Anfahrhilfe auf einer geneigten Fahrbahn**

Device and method for locking and release of pressure actuated vehicle brakes as a starting aid on an inclined roadway

Dispositif et méthode à serrage et desserage des freins de véhicule actionnés par pression comme aide au démarrage sur une voie inclinée

(84) Benannte Vertragsstaaten:
**DE ES FR GB**

(30) Priorität: **11.06.1996  DE 19623264**

(43) Veröffentlichungstag der Anmeldung:
**17.12.1997  Patentblatt 1997/51**

(73) Patentinhaber: **Volkswagen Aktiengesellschaft 38436 Wolfsburg (DE)**

(72) Erfinder: **Alberti, Volker 38102 Braunschweig (DE)**

(56) Entgegenhaltungen:
**EP-A- 0 280 818         EP-A- 0 389 205
EP-A- 0 523 338         DE-A- 3 507 330
DE-A- 3 618 532         US-A- 5 129 496**

**Beschreibung**

Die Erfindung bezieht sich auf eine Vorrichtung und ein Verfahren zum Festhalten und Lösen von druckmittelbetätigten Fahrzeugbremsen als Anfahrhilfe auf einer geneigten Fahrbahn gemäß den Oberbegriffen von Anspruch 1 und Anspruch 11.

Beim Anfahren auf einer geneigten Fahrbahn nach einem Abbremsvorgang ergibt sich für den Fahrer das Problem, die bis dahin betätigte Fahrzeugbremse zu lösen und gleichzeitig durch Betätigen des Gaspedals eine entsprechende Antriebskraft auf die Fahrzeugräder zu leiten, so daß das Fahrzeug weder wegrollt noch mit hoher Motordrehzahl ruckartig anfährt. Zu diesem Zweck sind Anfahrhilfen bekannt, die eine bis dahin festgehaltene Fahrzeugbremse lösen sollen, wenn eine entsprechende Antriebskraft auf die Räder wirkt.

Die DE 35 07 330 A1 beschreibt eine Bremsantage mit einer derartigen Anfahrhilfe. Ein in einer Bremsleitung vorgesehenes elektrisch steuerbares Ventil wird beim Auskuppeln bzw. bei einem Automatikgetriebe bei Nichtbetätigung des Gaspedals derart gesteuert, daß es den momentan an der Bremse herrschenden Bremsdruck aufrecht erhält, wenn ein Neigungsschalter bei Erreichen oder Überschreiten eines bestimmten Neigungswinkels des Fahrzeugs geschlossen wird. Der Bremsdruck wird somit nur bei Überschreiten eines vorgegebenen Neigungswinkels festgehalten, eine genauere Anpassung der Anfahrhilfe an die Neigung ist jedoch nicht möglich. Weiterhin wird lediglich qualitativ ein Kupplungsvorgang oder die Betätigung des Gaspedals bei einem Fahrzeug mit Automatikgetriebe festgestellt, so daß ein ruckfreies Anfahren auf der geneigten Fahrbahn unwahrscheinlich ist.

Die EP 0 280 818 A1 beschreibt eine Vorrichtung zum Halten der Bremskraft in einem Bremsmittelsystem, bei dem der auf die Bremsen einwirkende Bremsdruck freigegeben wird, wenn aus einem Vergleich der Motordrehzahl und einer gemessenen Betätigung des Gaspedals aufgrund einer relativ niedrigen Motordrehzahl festgestellt wird, daß eine Last auf den Motor wirkt. Durch einen derartigen Vergleich zweier Meßgrößen ist grundsätzlich eine genauere Einstellung des Zeitpunkts des Lösens der Bremse als in der DE 35 07 330 A1 möglich, da zwei variable Meßgrößen kontinuierlich gemessen werden. Allerdings ist der Vergleich der Motordrehzahl mit der Gaspedalbetätigung für die Ermittlung des optimalen Lösezeitpunktes relativ ungenau. Insbesondere wird die Neigung des Fahrzeugs nicht berücksichtigt.

Aus der EP 0 389 205 A1 ist ein Bremssystem bekannt, bei dem die an den nicht angetriebenen Rädern wirkenden Drehmomente mittels Drehmomentsensoren gemessen werden, und ein in einer Bremsleitung festgehaltener Bremsdruck freigegeben wird, wenn das an den Rädern gemessene Drehmoment den Wert Null annimmt. Mit diesem System ist es möglich, die Bremsen genau zu dem Zeitpunkt zu lösen, bei dem die auf das auf einer geneigten Fahrbahn stehende Fahrzeug wirkende Hangabtriebskraft durch die Antriebskraft des Motors kompensiert wird. Die Anbringung von Drehmomentsensoren an den Kraftfahrzeugrädern ist jedoch mit einem höheren apparativen Aufwand verbunden, da ein entsprechendes Meßgerät bei Kraftfahrzeugen nicht ohne weiteres zur Verfügung steht und somit eine aufwendige und kostspielige Ausrüstung der Kraftfahrzeuge notwendig ist. Bei dem Einbau entsprechender Drehmomentsensoren müßte auch sichergestellt werden, daß sie keine Beeinträchtigung der Funktionsfähigkeit der Fahrzeugräder bei Einfedervorgängen des Fahrzeugrads gegenüber dem Fahrzeugaufbau sowie beim Lenkeinschlag darstellen. Die EP 0 389 205 A1 zeigt einige Beispiele solcher aufwendiger Drehmomentsensoren, mit denen eine entsprechende Messung möglich ist. Dabei sollten jedoch nur die nicht angetriebenen Räder gebremst werden, da sonst eine Auswertung der Signale schwierig ist. Dies führt unter anderem zu Problemen bei einem Fahrzeug mit Allradantrieb.

Eine Vorrichtung und ein Verfahren der eingangs genannten Art sind aus der DE 36 18 532 A1 bekannt. Die Bestimmung des Freigabesignals erfolgt dort durch einen Vergleich des Motormoments T mit einem aus dem Neigungswinkel abgeleiteten Soll-Drehmoment $T_0$, das gegebenenfalls noch eine Gewichtskorrektur erfährt. Der Schaltzustand des Fahrzeuggetriebes wird beim Anfahren nicht berücksichtigt. Vielmehr wird davon ausgegangen, daß stets im ersten Gang oder im Rückwärtsgang, d. h. mit einem verhältnismäßig hohen Drehmoment angefahren wird. Stellt die Bestimmung des Freigabesignals jedoch stets auf die Übersetzung des ersten Gangs ab, so ist bei einer versehentlichen Wahl einer anderen Getriebestufe das an den Fahrzeugrädern zur Verfügung gestellte Drehmoment beim Lösen der Bremsen zu gering. Das Fahrzeug kann so unter Umständen zurückrollen. Da der Fahrer dies bei einer Anfahrhilfe nicht erwartet, sind die Risiken einer Fehlbedienung hier besonders hoch.

Der Erfindung liegt die Aufgabe zugrunde, hier Abhilfe zu schaffen. Insbesondere beabsichtigt die Erfindung, eine Vorrichtung und ein Verfahren zum Festhalten und Lösen von druckmittelbetätigten Fahrzeugbremsen für eine Anfahrhilfe auf einer geneigten Fahrbahn zu schaffen, mit denen der passende Zeitpunkt des Lösens der Bremse auf Fahrbahnen mit unterschiedlicher Neigung bestimmt werden kann, so daß ein ruckfreies Anfahren auf der geneigten Fahrbahn ermöglicht wird, ohne eine allzu kostspielige und aufwendige zusätzliche Ausrüstung des Fahrzeugs erforderlich zu machen.

Diese Aufgabe wird durch eine Vorrichtung nach Anspruch 1 und ein Verfahren nach Anspruch 11 gelöst. Die abhängigen Ansprüche beschreiben bevorzugte Weiterbildungen der erfindungsgemäßen Vorrichtung.

Erfindungsgemäß ist somit vorgesehen, das Antriebsmoment an den angetriebenen Fahrzeugrädern zu bestimmen und mit einem von einem durch einen Längsbeschleunigungssensor gebildeten Neigungssensor gemessenen Neigungswinkel des Fahrzeugs in Bezug zu setzen, um somit genau den Zeitpunkt feststellen zu können, an dem die auf die Räder wirkende Antriebskraft des Motors der durch die Erdbeschleunigung hervorgerufenen Hangabtriebskraft entspricht. Die genaue Messung des Neigungswinkels des Fahrzeugs ermöglicht eine genaue Bestimmung des Lösezeitpunkts auf Fahrbahnen mit beliebiger Neigung. Das auf die Fahrzeugräder wirkende Antriebsmoment wird dabei durch eine Ermittlung des Motormoments und des Übersetzungsverhältnisses des Fahrzeuggetriebes bestimmt. Das Motormoment kann dabei aus einer geeigneten Schnittstelle des fahrzeuginternen Datenbusses, z. B. einer CAN-Verbindung zum Motorsteuergerät, entnommen werden.

Der Verwendung eines Längsbeschleunigungssensors zur Neigungsbestimmung liegt die Überlegung zugrunde, daß die im Fahrzeug gemessene Längsbeschleunigung dem Sinusanteil der auf das Fahrzeug wirkenden Erdbeschleunigung entspricht, so daß die Neigung des Fahrzeugs aus dem Verhältnis der gemessenen Längsbeschleunigung und der Erdbeschleunigung ermittelt werden kann. Der Neigungswinkel des Fahrzeugs kann somit auf einfache Weise durch einen z. B. als Feder-Masse-System gebildeten Längsbeschleunigungssensor kontinuierlich gemessen werden. In dieser Ausbildung des Neigungssensors wird ein besonders vorteilhafter Aspekt der Erfindung gesehen, da der erfindungsgemäße Gedanke der Anpassung des Lösemoments an den jeweiligen Neigungswinkel hierdurch auf besonders einfache, kostengünstige und genaue Weise durchgeführt werden kann.

Zum Festhalten und Lösen des Bremsdrucks können in einfacher Weise die Halteventile eines EDS (elektronische Differentialsperre) oder FSR (Fahrstabilitätsregelung) verwendet werden. Die Raddrehzahlen können von den Drehzahlsensoren eines Antiblockiersystems (ABS) bestimmt werden. Die erfindungsgemäße Vorrichtung läßt sich somit besonders gut bei einem mit einem ABS und EDS-System oder FSR-System ausgestatteten Fahrzeug verwirklichen.

Die Erfindung wird im folgenden an einer Ausführungsform anhand der beiliegenden Zeichnungen näher erläutert. Es zeigen:

Figur 1 die Darstellung eines Fahrzeugs mit einer Vorrichtung gemäß einer Ausführungsform der Erfindung auf einer geneigten Fahrbahn, und

Figur 2 ein Blockschaltbild der erfindungsgemäßen Vorrichtung aus Figur 1.

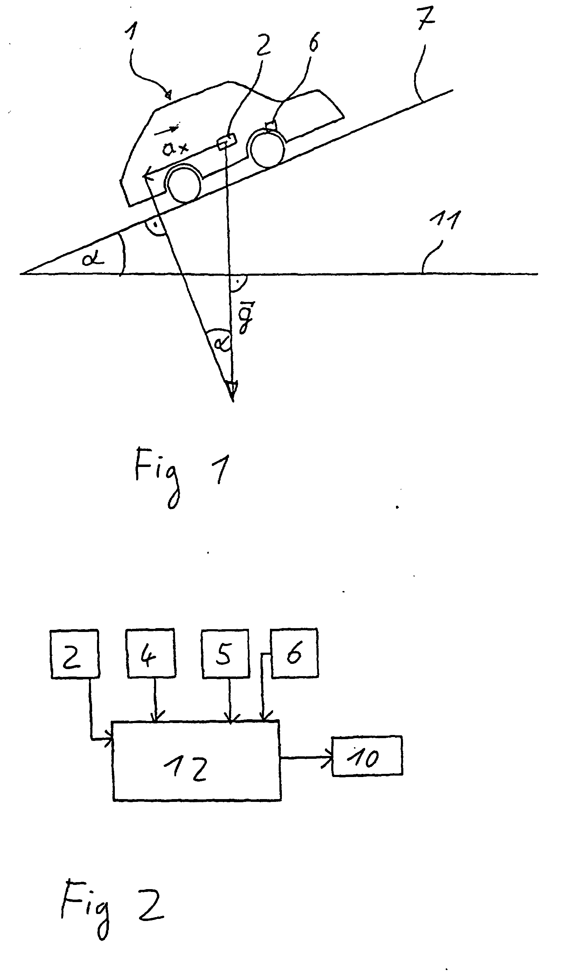

Ein Kraftfahrzeug 1 steht auf einer mit einem Neigungswinkel $\alpha$ gegenüber einer horizontalen Ebene 11 geneigten Fahrbahn 7. Die auf das Fahrzeug 1 einwirkende Gravitationsbeschleunigung g weist in Längsrichtung des Fahrzeugs als Hangabtriebskomponente die Längsbeschleunigung $a_x$ auf. Wie aus Figur 1 ersichtlich ist, ergibt sich der Neigungswinkel $\alpha$ aus dem Verhältnis von Längsbeschleunigung $a_x$ und Erdbeschleunigung g:

$$\sin \alpha = a_x/g.$$

Zur Messung der Längsbeschleunigung $a_x$ ist in dem Fahrzeug ein Längsbeschleunigungssensor 2 untergebracht. Raddrehzahlsensoren 6, die vorteilhafterweise auch für das Antiblockiersystem (ABS) verwendet werden können, messen die Raddrehzahlen der Fahrzeugräder. Eine Motormomentmeßeinrichtung 4 mißt oder berechnet ein vom Motor erzeugtes Motormoment. Das Motormoment kann dabei z. B. in bekannter Weise aus einer Messung des Durchsatzes der verbrauchten Luftmenge, des Kraftstoffs und anderer Meßgrößen berechnet werden. Derartige Motormomentmeßeinrichtungen werden bereits verwendet, um einem Motorsteuergerät aktuelle Daten über das vom Motor erzeugte Drehmoment zu liefern. Zu diesem Zweck sind in den Fahrzeugen oftmals Datenbusverbindungen mit entsprechenden Schnittstellen eingerichtet, wie z. B. die CAN-Verbindung zum Motorsteuergerät. Ein Gangsensor 5 dient zur Feststellung des jeweils eingelegten Getriebegangs. Die Meßeinrichtungen 2, 4, 5 und 6 geben ihre Daten an eine Steuereinrichtung 12 weiter.

Eine Ventileinrichtung 10 ist in den Bremsmittelzuleitungen zu den Fahrzeugbremsen oder in der Hydraulikeinheit des ABS(-EDS)-Systems angeordnet und kann von einem offenen Zustand, in dem der Bremsdruck in der Bremsmittelzuleitung freigegeben ist, in einen geschlossenen Zustand umgeschaltet werden, wodurch der auf die Bremsen einwirkende Bremsdruck in der Leitung zwischen der Ventileinrichtung und den Fahrzeugbremsen festgehalten wird. Als derartige Ventileinrichtung 10 können die absperrbaren Hydraulikventile eines Systems mit elektronischer Differentialsperre (EDS) verwendet werden. Die Halteventile sind dabei als Rückschlagventile ausgebildet, um eine Druckerhöhung bei Betätigung der Bremse auch im gesperrten Zustand zu ermöglichen.

Wenn das Fahrzeug auf einer geneigten Fahrbahn anhält und der Fahrer die Bremse betätigt, wird der Stillstand des Fahrzeugs von den Raddrehzahlsensoren 6 angezeigt. Wenn der Neigungssensor 2 ein Überschreiten eines minimalen Neigungswinkels $\alpha$, z. B. 2°, feststellt, bestimmt die Steuereinrichtung 12, daß der vom Fahrer angesteuerte Bremsdruck festgehalten werden soll. Dazu gibt sie entsprechende Sperrsignale an die Halteventile, so daß diese den Bremsdruck halten.

Vorteilhafterweise werden die Halteventile erst von der Steuereinrichtung 12 gesperrt, wenn der Radstillstand von den Raddrehzahlmessem eine gewisse Zeitdauer, z. B. eine Sekunde, angezeigt wird. Zusätzlich kann als Bedingung für die Sperrung der Halteventile auch der Bremsdruck in den Bremsleitungen gemessen und/oder der Bremslichtschalter verwendet werden. Somit ist die erfindungsgemäße Vorrichtung aktiviert.

Die Steuereinrichtung 12 bestimmt anschließend das auf die Fahrzeugräder einwirkende Antriebsmoment aus dem Motormoment und dem Übersetzungsverhältnis und vergleicht diese Antriebskraft mit der Abtriebskraft aufgrund der Neigung des Fahrzeugs.

Wenn die Steuereinrichtung 12 feststellt, daß das auf die Fahrzeugräder einwirkende Antriebsmoment der Neigung α der Fahrbahn entspricht, wird ein Signal an die Ventileinrichtung 10 ausgesandt, so daß diese von dem geschlossenen in den offenen Zustand übergeht und den Bremsdruck in der Bremsdruckzuleitung wieder freigibt. Das Fahrzeug kann somit ruckfrei anfahren, ohne daß der Fahrer vor dem Anfahren die Bremse mittels des Bremspedals oder mittels der Handbremse betätigen und beim Anfahren bei Betätigung des Gaspedals die Bremse ohne Kenntnis des tatsächlich einwirkenden Motormoments lösen muß.

Die erfindungsgemäße Vorrichtung kann vorteilhafterweise mit einem EDS-System beziehungsweise einem ABS (Antiblockiersystem)/EDS-System oder auch einer FSR (Fahrstabilitätsregelung) kombiniert werden. Dabei werden die für zwei oder vier Räder vorhandenen Halteventile genutzt. Da die Raddrehzahlsensoren 6 bereits für das ABS und die Ventileinrichtung 10 bereits für das EDS-System benötigt werden, müssen nur der Neigungssensor 2, die Motormomentmeßeinrichtung 4 und der Getriebegangsensor 5 bereitgestellt werden. Dabei kann, wie oben beschrieben, oftmals auf bereits vorhandene Systeme zur Feststellung des Motormoments und Getriebegangs zurückgegriffen werden, so daß für viele Fahrzeuge lediglich der Neigungssensor 2 zusätzlich vorzusehen ist. Als Steuereinrichtung 12 kann auf einfache Weise das ABS/EDS-Steuergerät verwendet werden, das lediglich die zusätzlichen Meßdaten des Neigungssensors 2, das Motormoment und die Getriebestufe aufnehmen muß, so daß die erfindungsgemäße Vorrichtung und das erfindungsgemäße Verfahren durch eine entsprechende Programmierung dieses bereits vorhandenen Steuergeräts gewährleistet werden können.

Die Meßdaten des Neigungssensors 2 können dabei auch zusätzlich zur Optimierung der ABS-Funktion verwendet werden, da aus der während der Fahrt gemessenen Längsbeschleunigung auf die durch die Bremswirkung hervorgerufene Bremsverzögerung geschlossen werden kann.

In die Berechnung der Hangabtriebskraft kann zusätzlich noch die Fahrzeugmasse einbezogen werden. Sie kann z. B. durch verschiedene Meßwerte während einer Fahrt aufgrund der gemessenen Fahrzeugbeschleunigung bei mehreren Abbrems- und Beschleunigungsvorgängen, insbesondere aus einem Vergleich mit dem gemessenen Motormoment, bestimmt werden. Mit der so ermittelten Fahrzeugmasse kann die auf das Fahrzeug einwirkende Hangabtriebskraft genauer ermittelt werden. Für die Anfangsphase einer Fahrt kann dabei von einem mittleren, einem oberen oder einem unteren vorgegebenen oder gespeicherten Wert der Fahrzeugmasse ausgegangen werden. Eine so ermittelte Fahrzeugmasse kann weiterhin auch für die ABS-, EDS- und FSR-Funktion verwendet werden.

Weiterhin kann eine Sicherheitsvorrichtung angebracht werden, um gegebenenfalls den Fahrer zu warnen, die erfindungsgemäße Vorrichtung nicht mißbräuchlich zum dauerhaften Feststellen der Fahrzeugbremsen, daß heißt als Ersatz für die Handbremse, zu benutzen. Dies kann z. B. durch eine entsprechende Anzeigevorrichtung oder einen Warnblinker oder -lampe sichergestellt werden, der bei Ausschalten der Zündung und festgehaltener Fahrzeugbremse sowie eventuell bei Öffnen der Tür aktiviert wird.

**Patentansprüche**

**1.** Vorrichtung zum Festhalten und Lösen von druckmittelbetätigten Radbremsen eines Kraftfahrzeugs für eine Anfahrhilfe auf einer geneigten Fahrbahn, mit

- einer Ventileinrichtung (10) zum Festhalten und Freigeben eines Bremsmitteldrucks in einer Druckmittelleitung zu einigen oder allen Radbremsen,
- einem Neigungssensor (2) zum Feststellen einer Neigung des Fahrzeugs gegenüber einer horizontalen Ebene, wobei der Neigungssensor (2) einen Neigungswinkel α gegenüber der horizontalen Ebene mißt,
- einer Einrichtung (4, 5) zum Feststellen eines Antriebsmoments,
- einer Steuereinrichtung (12) zum Aufnehmen der Meßwerte und Ausgeben eines Sperrsignals und eines Freigabesignals an die Ventileinrichtung (10), wobei die Steuereinrichtung (12) einen Fahrzeugstillstand feststellt und bei Fahrzeugstillstand ein Sperrsignal an die Ventileinrichtung (10) abgibt, derart, daß der vom Fahrer eingegebene Bremsdruck festgehalten wird, und die Steuereinrichtung (12) anschließend feststellt, ob ein dem Neigungswinkel α entsprechendes Antriebsmoment vorliegt und bei Vorliegen des entsprechenden Antriebsmoments ein Signal an die Ventileinrichtung (10) ausgibt, den Bremsdruck wieder freizugeben, **dadurch gekennzeichnet, daß** der Neigungssensor (2) durch einen Längsbeschleunigungssensor gebildet ist und daß die Steuereinrichtung (12) das Antriebsmoment an den Fahrzeugrädem bestimmt, und zwar aus einem ermittelten Motormoment und einem Übersetzungsverhältnis eines eingelegten Getriebegangs.

2. Vorrichtung nach Anspruch 1, **dadurch gekennzeichnet, daß** das Motormoment einer Schnittstelle eines fahrzeuginternen Datenbusses zum Motorsteuergerät entnehmbar ist.

3. Vorrichtung nach Anspruch 1 oder 2, **dadurch gekennzeichnet, daß** ein Getriebegangsensor (5) zum Feststellen des eingelegten Getriebegangs vorgesehen ist.

4. Vorrichtung nach einem der Anprüche 1 bis 3, **dadurch gekennzeichnet, daß** der Längsbeschleunigungssensor ein Feder-Masse-System ist.

5. Vorrichtung nach einem der Ansprüche 1 bis 4, **dadurch gekennzeichnet, daß** die Ventileinrichtung (10) Halteventile einer elektronischen Differentialsperre oder eines Fahrstabilitätsregelungssystems umfaßt.

6. Vorrichtung nach einem der Ansprüche 1 bis 5, **dadurch gekennzeichnet, daß** eine Raddrehzahlmeßeinrichtung zum Messen einer Raddrehzahl an einigen oder allen Fahrzeugrädern vorhanden ist, und daß die Steuereinrichtung (12) den Fahrzeugstillstand feststellt, wenn die Raddrehzahlen über einen bestimmten vorgegebenen Zeitraum den Wert Null annehmen.

7. Vorrichtung nach Anspruch 6, **dadurch gekennzeichnet, daß** die Raddrehzahlmeßeinrichtung die Raddrehzahlsensoren (6) eines Antiblockiersystems umfaßt.

8. Vorrichtung nach einem der Ansprüche 1 bis 7, **dadurch gekennzeichnet, daß** die Steuereinrichtung (12) bei Fahrzeugstillstand ein Sperrsignal an die Ventileinrichtung (10) dann abgibt, wenn ein vorgegebener Neigungswinkel $\alpha$ überschritten wird.

9. Vorrichtung nach einem der Ansprüche 1 bis 8, **dadurch gekennzeichnet, daß** die Steuereinrichtung (12) für die Bestimmung des Freigabesignals die Masse des Fahrzeugs einbezieht, und daß die Fahrzeugmasse aus Meßwerten während einer Fahrtdauer ermittelt wird.

10. Vorrichtung nach einem der Ansprüche 1 bis 9, **dadurch gekennzeichnet, daß** die Ventileinrichtung (10) Halteventile in Form von Rückschlagventilen aufweist, die derart angeordnet sind, daß ein vom Fahrer eingespeister höherer Bremsdruck an die Radbremsen weitergegeben wird.

11. Verfahren zum Festhalten und Lösen von druckmittelbetätigten Radbremsen eines Kraftfahrzeugs für eine Anfahrhilfe auf einer geneigten Fahrbahn durch Festhalten und Freigeben eines Bremsmitteldrucks in einer Druckmittelleitung zu einigen oder allen Radbremsen, insbesondere unter Verwendung einer Vorrichtung nach einem der Ansprüche 1 bis 10, bei dem

- ein Stillstand des Fahrzeugs festgestellt wird,
- bei Stillstand des Fahrzeugs ein vom Fahrer eingegebener Bremsdruck festgehalten wird,
- anschließend ein Antriebsmoment festgestellt wird,
- weiterhin ein Neigungswinkel $\alpha$ gegenüber einer horizontalen Ebene gemessen wird,
- anhand des Antriebsmoments und des Neigungswinkels $\alpha$ festgestellt wird, ob ein dem Neigungswinkel $\alpha$ entsprechendes Antriebsmoment vorliegt und bei Vorliegen des entsprechenden Antriebsmoments der Bremsdruck freigegeben wird,

**dadurch gekennzeichnet, daß** der Neigungswinkel $\alpha$ mittels eines Längsbeschleunigungssensors gemessen wird und daß das Antriebsmoment an den Fahrzeugrädern bestimmt wird, und zwar aus einem ermittelten Motormoment und einem Übersetzungsverhältnis eines eingelegten Getriebegangs.

**Claims**

1. Device for maintaining and releasing pressure medium-activated wheel brakes of a motor vehicle for a starting aid on an inclined roadway having

- a valve device (10) for maintaining and releasing a braking medium pressure in a pressure medium line to some or all of the wheel brakes,
- an inclination sensor (2) for determining an inclination of the vehicle with respect to a horizontal plane, the inclination sensor (2) measuring an inclination angle $\alpha$ with respect to the horizontal plane,
- a device (4, 5) for determining a drive torque,
- a control device (12) for registering the measured values and outputting a blocking signal and a release signal to the valve device (10), the control device (12) determining a stationary state of the vehicle and, when the vehicle is in a stationary state, outputting a blocking signal to the valve device (10) in such a way that the brake pressure input by the driver is maintained, and the control device (12) subsequently determines whether a drive torque which corresponds to the inclination angle α is present, and, if the corresponding drive torque is present, outputs a signal to the valve device (10) to release the brake pressure again,

**characterized in that** the inclination sensor (2) is formed by a longitudinal acceleration sensor, and **in that** the control device (12) determines the drive torque at the vehicle wheels, specifically from an engine torque which is determined and a transition ratio of a selected gearspeed.

2. Device according to Claim 1, **characterized in that** the engine torque can be obtained from an interface of a vehicle-internal data bus to the engine control unit.

3. Device according to Claim 1 or 2, **characterized in that** a gearspeed sensor (5) is provided for determining the selected gearspeed.

4. Device according to one of Claims 1 to 3, **characterized in that** the longitudinal acceleration sensor is a spring-mass system.

5. Device according to one of Claims 1 to 4, **characterized in that** the valve device (10) comprises pressure-maintaining valves of an electronic differential lock or of a driving stability control system.

6. Device according to one of Claims 1 to 5, **characterized in that** a wheel speed measuring device for measuring a wheel speed at some or all of the vehicle wheels is present, and **in that** the control device (12) determines the stationary state of the vehicle if the wheel speeds assume the value zero over a specific predetermined time period.

7. Device according to Claim 6, **characterized in that** the wheel speed measuring device comprises the wheel speed sensors (6) of an antilock brake system.

8. Device according to one of Claims 1 to 7, **characterized in that**, when the vehicle is in a stationary state, the control device (12) outputs a blocking signal to the valve device (10) only if a predefined inclination angle α is exceeded.

9. Device according to one of Claims 1 to 8, **characterized in that** the control device (12) includes the mass of the vehicle in the determination of the release signal, and **in that** the vehicle mass is determined from measured values during a driving period.

10. Device according to one of Claims 1 to 9, **characterized in that** the valve device (10) has pressure-maintaining valves in the form of non-return valves which are arranged in such a way that a relatively high brake pressure which is supplied by the driver is passed on to the wheel brakes.

11. Method for maintaining and releasing pressure medium-activated wheel brakes of a motor vehicle for a starting aid on an inclined roadway by maintaining and releasing a braking medium pressure in a pressure medium line to some or all of the wheel brakes, in particular using a device according to one of Claims 1 to 10, in which

    - a stationary state of the vehicle is determined,
    - when the vehicle is in a stationary state, a brake pressure which is input by the driver is maintained,
    - a drive torque is subsequently determined,
    - an inclination angle α with respect to a horizontal plane is measured,
    - it is determined, by reference to the drive torque and the inclination angle α, whether a drive torque which corresponds to the inclination angle α is present, and if the corresponding drive torque is present the braking pressure is released,

    **characterized in that** the inclination angle α is measured by means of a longitudinal acceleration sensor, and **in that** the drive torque at the vehicle wheels is determined, specifically from an engine torque which is determined and from the transmission ratio of a selected gearspeed.

## Revendications

1. Dispositif de serrage et de desserrage des freins de roue actionnés par pression d'un véhicule comme aide au démarrage sur une voie inclinée, comprenant

    - un mécanisme à vannes (10) pour maintenir et libérer une pression de fluide de freinage dans une conduite à fluide de freinage vers un ou tous les freins de roue,
    - un capteur d'inclinaison (2) pour déterminer une inclinaison du véhicule par rapport à un plan horizontal, le capteur d'inclinaison (2) mesurant un angle d'inclinaison α par rapport au plan horizontal,
    - un mécanisme (4, 5) pour déterminer un couple d'entraînement,
    - un mécanisme de commande (12) pour collecter les valeurs mesurées et délivrer un signal de blocage et un signal de libération au mécanisme à vannes (10) ; le mécanisme de commande (12) déterminant une immobilisation du véhicule et, lorsque le véhicule est immobilisé, délivre un signal de blocage au mécanisme à vannes (10) de manière à maintenir la pression de freinage appliquée par le conducteur et le mécanisme de commande (12) détermine ensuite s'il existe un couple d'entraînement correspondant à l'angle d'inclinaison α et délivre un signal au mécanisme à vannes (10) en présence d'un couple d'entraînement correspondant afin de libérer de nouveau la pression de freinage,

**caractérisé en ce que** le capteur d'inclinaison (2) est constitué d'un capteur d'accélération longitudinale et que le mécanisme de commande (12) déterminer le couple d'entraînement au niveau des roues du véhicule, et ce à partir d'un couple déterminé du moteur et d'un rapport de démultiplication d'un rapport de transmission engagé.

2. Dispositif selon la revendication 1, **caractérisé en ce que** le couple du moteur peut être relevé sur une interface d'un bus de données interne au véhicule vers la commande du moteur.

3. Dispositif selon la revendication 1 ou 2, **caractérisé en ce qu'**il est prévu un capteur de rapport de transmission (5) pour déterminer le rapport de transmission engagé.

4. Dispositif selon l'une des revendications 1 à 3, **caractérisé en ce que** le capteur d'accélération longitudinale est un système à ressort et à masse.

5. Dispositif selon l'une des revendications 1 à 4, **caractérisé en ce que** le mécanisme à vannes (10) comprend des vannes d'arrêt d'un blocage électronique du différentiel ou d'un système de régulation de la stabilité de conduite.

6. Dispositif selon l'une des revendications 1 à 5, **caractérisé en ce qu'**il existe un mécanisme de mesure de vitesse de rotation de roue pour mesurer une vitesse de rotation de roue sur une ou sur toutes les roues du véhicule et que le mécanisme de commande (12) détermine l'immobilisation du véhicule lorsque les vitesses de rotation des roues prennent la valeur zéro pendant une certaine période prédéfinie.

7. Dispositif selon la revendication 6, **caractérisé en ce que** le mécanisme de mesure de vitesse de rotation de roue comprend les capteurs de vitesse de rotation de roue (6) d'un système anti-blocage.

8. Dispositif selon l'une des revendications 1 à 7, **ca-**

**ractérisé en ce que**, lorsque le véhicule est immobile, le mécanisme de commande (12) délivre un signal de blocage au mécanisme à vannes (10) lorsqu'un angle d'inclinaison α prédéfini est dépassé.

9. Dispositif selon l'une des revendications 1 à 8, **caractérisé en ce que** le mécanisme de commande (12) tient compte de la masse du véhicule pour la détermination du signal de libération et que la masse du véhicule est déterminée à partir des valeurs mesurées pendant la durée d'un déplacement.

10. Dispositif selon l'une des revendications 1 à 9, **caractérisé en ce que** le mécanisme à vannes (10) présente des vannes d'arrêt sous la forme de clapets anti-retour qui sont disposés de telle manière qu'une pression de freinage plus élevée appliquée par le conducteur est transmise aux freins des roues.

11. Méthode de serrage et de desserrage des freins de roue actionnés par pression d'un véhicule comme aide au démarrage sur une voie inclinée en maintenant et en libérant une pression de fluide de freinage dans une conduite à fluide de freinage vers un ou tous les freins de roue, notamment en utilisant un dispositif selon l'une des revendications 1 à 10, avec laquelle

- un état d'immobilisation du véhicule est déterminé,
- une pression de freinage appliquée par le conducteur est maintenue lors de l'immobilisation du véhicule,
- un couple d'entraînement est ensuite déterminé,
- un angle d'inclinaison α par rapport au plan horizontal est en plus mesuré,
- le couple d'entraînement et l'angle d'inclinaison α permettent de déterminer s'il existe un couple d'entraînement correspondant à l'angle d'inclinaison α et, en présence du couple d'entraînement correspondant, la pression de freinage est libérée,

**caractérisée en ce que** l'angle d'inclinaison α est mesuré à l'aide d'un capteur d'accélération longitudinale et que le couple d'entraînement est déterminé au niveau des roues du véhicule, et ce à partir d'un couple déterminé du moteur et d'un rapport de démultiplication d'un rapport de transmission engagé.

Fig 1

Fig 2